# EUROPÄISCHE PATENTANMELDUNG

(11) **EP 3 795 421 A1**
(43) Veröffentlichungstag der Anmeldung: **24.03.2021**
(21) Anmeldenummer: 19198689.2
(22) Anmeldetag: 20.09.2019
(51) Int. Cl.: B60Q 1/068, F21S 45/47

(54) **BELEUCHTUNGSVORRICHTUNG FÜR EINEN KRAFTFAHRZEUGSCHEINWERFER**

(71) Anmelder: ZKW Group GmbH, 3250 Wieselburg (AT)
(72) Erfinder: Steinkellner, Johann, 3683 Yspertal (AT)
(74) Vertreter: Patentanwaltskanzlei Matschnig & Forsthuber OG

(57) **Zusammenfassung**

Beleuchtungsvorrichtung für einen Kraftfahrzeugscheinwerfer, welche Beleuchtungsvorrichtung (10) Folgendes umfasst:
- ein Lichtmodul (100), umfassend:
- zumindest eine Lichtquelle (110), eine Primäroptik (200), einen Kühlkörper (300), und
- einen Haltekörper (400), welcher eingerichtet ist, die Primäroptik (200) in ihrer Position zu halten, wobei der Haltekörper (400) und der Kühlkörper (300) mittels eines Befestigungsmittels (500) miteinander verbunden sind,

- und einen Tragerahmen (700), an welchem das Lichtmodul (100) über eine Einstellschraube (800) befestigt ist, welche einen Schraubkopf (810) und einen Schraubabschnitt entlang einer Längsachse (A) umfasst, welcher Schraubkopf (810) an dem Lichtmodul (100) gelenksartig gelagert ist, wobei das Lichtmodul (100) eine Lagereinrichtung (900) umfasst, welche Lagereinrichtung (900) eine erste und eine zweite Lagerschale (910, 920) umfasst, welche gemeinsam eine Gelenkspfanne bilden, wobei die erste Lagerschale (910) an dem Haltekörper (400) angeordnet ist und die zweite Lagerschale (920) an dem Kühlkörper (300) angeordnet ist, und wobei die Lagereinrichtung (900) eingerichtet ist, den Schraubkopf (810) zu lagern, und wobei die Gelenkspfanne den Schraubkopf (810) derart umschließt, dass die zumindest eine Einstellschraube (800) gegen eine Verschiebung in Richtung ihrer Längsachse (A) gesichert ist.

## Beschreibung

Die Erfindung betrifft eine Beleuchtungsvorrichtung für einen Kraftfahrzeugscheinwerfer, welche Beleuchtungsvorrichtung Folgendes umfasst:
- ein Lichtmodul, umfassend:
   - zumindest eine Lichtquelle,
   - eine Primäroptik zum Formen einer Lichtverteilung aus dem Licht der zumindest einen Lichtquelle,
   - einen mit der zumindest einen Lichtquelle in thermischen Kontakt stehenden Kühlkörper, der eingerichtet ist, Wärme von der zumindest einen Lichtquelle abzuführen, und
   - einen Haltekörper, welcher eingerichtet ist, die Primäroptik in Bezug auf die zumindest eine Lichtquelle in ihrer Position zu halten, wobei der Haltekörper und der Kühlkörper mittels zumindest eines Befestigungsmittels miteinander verbunden sind,
- und einen Tragerahmen, an welchem das Lichtmodul über zumindest eine Einstellschraube befestigt ist, wobei die Einstellschraube einen Schraubkopf und einen Schraubabschnitt entlang einer Längsachse umfasst, welcher Schraubkopf an dem Lichtmodul gelenksartig gelagert ist und welcher Schraubabschnitt an dem Tragerahmen angreift.

Ferner betrifft die Erfindung einen Kraftfahrzeugscheinwerfer mit zumindest einer erfindungsgemäßen Beleuchtungsvorrichtung.

Üblicherweise können eine oder mehrere Lichtmodule vorgesehen sein, die allein oder gemeinsam auf einem Tragerahmen montiert werden, welcher Tragerahmen anschließend in einem Kraftfahrzeugscheinwerfer eingebaut wird.

Um die Lichtmodule mit dem Tragerahmen mechanisch zu verbinden, ist aus dem Stand der Technik bekannt, dass die Lichtmodule mittels Schrauben, welche über den Tragerahmen in den Kühlkörper der Beleuchtungsvorrichtung eingeschraubt werden, montiert werden.

Dazu sind allerdings beispielsweise zusätzliche Bauteile notwendig, die als Schnittstelle zwischen dem Lichtmodul und der Einstellschraube dienen, wobei die Fertigung dieser Bauteile und die dazu korrespondierende herzustellende Lagerstelle an dem Lichtmodul Fertigungstoleranzen unterworfen sind. Ferner muss für jede Lagerstelle und dem korrespondierendem Bauteil ein komplexer Befestigungsmechanismus entworfen und gefertigt werden, da Kraftfahrzeugscheinwerfer in einem Fahrzeug im Betrieb Vibrationen unterlegen sind, die dazu führen können, dass sich nicht fest gelagerte Schrauben wieder lösen können.

Es ist eine Aufgabe der Erfindung eine verbesserte Beleuchtungsvorrichtung bereitzustellen.

Diese Aufgabe wird dadurch gelöst, dass das Lichtmodul zumindest eine Lagereinrichtung zur gelenkartigen Lagerung des Schraubkopfes der zumindest einen Einstellschraube umfasst, welche Lagereinrichtung eine erste und eine zweite Lagerschale umfasst, wobei die erste und die zweite Lagerschale durch Zusammenführen der beiden Lagerschalen gemeinsam eine Gelenkspfanne bilden, wobei die erste Lagerschale an dem Haltekörper angeordnet ist und die zweite Lagerschale an dem Kühlkörper angeordnet ist, und wobei die Lagereinrichtung eingerichtet ist, den Schraubkopf der zumindest einen Einstellschraube zu lagern, und wobei die Gelenkspfanne den Schraubkopf der zumindest einen Einstellschraube derart umschließt, dass die zumindest eine Einstellschraube gegen eine Verschiebung in Richtung ihrer Längsachse gesichert ist.

Durch die Lösung werden zusätzliche Bauteile zur Befestigung und Nutzung der Einstellschrauben wie im Stand der Technik vermieden, wodurch auch eine Kostenreduktion erzielt wird.

Ebenfalls wird auch der Abstimmungsaufwand zwischen den erwähnten Bauteilen aus dem Stand der Technik vermieden.

Mit Vorteil kann vorgesehen sein, dass die zumindest eine Einstellschraube einen Gewinde aufweisenden Gewindeabschnitt und der Tragerahmen zumindest ein Gegengewindeelement umfasst, welches zumindest eine Gegengewindeelement ein zu dem Gewinde der zumindest einen Einstellschraube korrespondierendes Gegengewinde aufweist.

Dabei kann vorgesehen sein, dass die Einstellschrauben selbstschneidend ausgebildet sind und das Gegengewinde aufgrund des erstmaligen Einschraubens der Einstellschraube in den Tragerahmen entsteht.

Vorteilhafterweise kann das Lichtmodul zumindest zwei Lagereinrichtungen umfassen, wobei die Beleuchtungsvorrichtung eine der Anzahl der Lagereinrichtungen entsprechende Anzahl an korrespondierenden Einstellschrauben aufweist.

Es kann vorgesehen sein, dass das Lichtmodul genau drei Lagereinrichtungen umfasst, wobei die Beleuchtungsvorrichtung zumindest drei zu den entsprechenden Lagereinrichtungen korrespondierende Einstellschrauben umfasst.

Es kann ferner vorgesehen sein, dass die zu den Einstellschrauben korrespondierenden Gegengewindeelemente des Tragerahmens derart an dem Tragerahmen angeordnet sind, dass gedachte Verbindungslinien zwischen den Gegengewindeelementen ein rechtwinkeliges Dreieck bilden, vorzugsweise ein gleichschenkeliges rechtwinkeliges Dreieck.

Die so gedachten Verbindungslinien entsprechen in einem eingebauten Zustand der Beleuchtungsvorrichtung in einem Kraftfahrzeugscheinwerfer, welcher ordnungsgemäß in einem Kraftfahrzeug montiert ist, beispielsweise einer horizontalen und einer vertikalen Schwenkachse. Eine solche Anordnung der Gegengewindeelemente an dem Tragerahmen zusammen mit den Einstellschrauben und den entsprechenden Lagereinrichtungen des Lichtmoduls kann auch als Einstelldreiecke-System bezeichnet werden.

Unter dem Begriff "Einstelldreieck-System" wird im Zusammenhang mit der vorliegenden Erfindung generell ein Einstellsystem verstanden, welches über drei Stellelemente (z.B. Einstellschrauben), die mit dem korrespondierenden Lichtmodul und mit dem Tragrahmen zumindest drehbar verbunden sind, das Lichtmodul bezüglich des Tragrahmens verstellt. Dabei erfolgt normalerweise das Verstellen mittels mechanischer und/oder elektromotorischer Stellmitteln, die der Beleuchtungsvorrichtung zugeordnet sind.

Es kann vorgesehen sein, dass zumindest eine Einstellschraube in einem Langloch in dem Tragerahmen angeordnet ist. Es kann auch vorgesehen sein, dass zumindest zwei, vorzugsweise genau zwei Einstellschrauben jeweils in einem Langloch in dem Tragerahmen angeordnet sind, beispielsweise ist eine Einstellschraube in einem horizontal ausgebildeten Langloch angeordnet und eine andere Einstellschraube in einem vertikal ausgebildeten Langloch angeordnet.

Die Begriffe "vertikal" und "horizontal" beziehen sich hierbei auf eine in einen Kraftfahrzeugscheinwerfer eingebaute Beleuchtungsvorrichtung, wobei der Kraftfahrzeugscheinwerfer ordnungsgemäß in einem Kraftfahrzeug eingebaut ist.

Es kann dabei günstig sein, wenn die Längsachsen der Einstellschrauben im zumindest teilweise eingeschraubten Zustand der Einstellschrauben an dem Tragerahmen parallel zueinander angeordnet sind.

In einer zweckmäßigen Ausgestaltung kann vorgesehen sein, dass die erste Lagerschale der zumindest einen Lagereinrichtung einstückig mit dem Haltekörper hergestellt ist.

In einer zweckmäßigen Ausgestaltung kann vorgesehen sein, dass die zweite Lagerschale der zumindest einen Lagereinrichtung einstückig mit dem Kühlkörper hergestellt ist.

Es kann günstig sein, wenn der Schraubkopf der zumindest einen Einstellschraube drehbar um die Längsachse der Einstellschraube in der zumindest einen Lagereinrichtung gelagert ist.

Es kann vorgesehen sein, dass der Schraubkopf der zumindest einen Einstellschraube als Gelenkskopf bzw. als Kugelkopf ausgebildet ist.

Dadurch bildet die zumindest eine Einstellschraube zusammen mit der zumindest einen Lagereinrichtung ein Kugelgelenk, wobei prinzipiell dreiachsige Drehungen der

Einstellschraube möglich (zumindest in einem gewissen Ausmaß), translatorische Bewegungen entlang der Längsachse der Einstellschraube allerdings nicht möglich sind.

Die Aufgabe wird ebenso mit einem Kraftfahrzeugscheinwerfer mit zumindest einer erfindungsgemäßen Beleuchtungsvorrichtung gelöst.

Nachfolgend wird die Erfindung anhand von beispielhaften Zeichnungen näher erläutert. Hierbei zeigt
Fig. 1 eine Seitenansicht einer beispielhaften Beleuchtungsvorrichtung mit einem Lichtmodul, welcher mittels Einstellschrauben auf einem Tragerahmen befestigt sind, wobei die Einstellschrauben jeweils in einer Lagereinrichtung des Lichtmoduls gelenkig und drehbar gelagert sind, Fig. 2 eine Detailansicht einer in einer Lagereinrichtung gelagerten Einstellschraube,
Fig. 3 eine Rückansicht der beispielhaften Beleuchtungsvorrichtung aus Fig. 1, und
Fig. 4 eine Rückansicht einer weiteren beispielhaften Beleuchtungsvorrichtung.

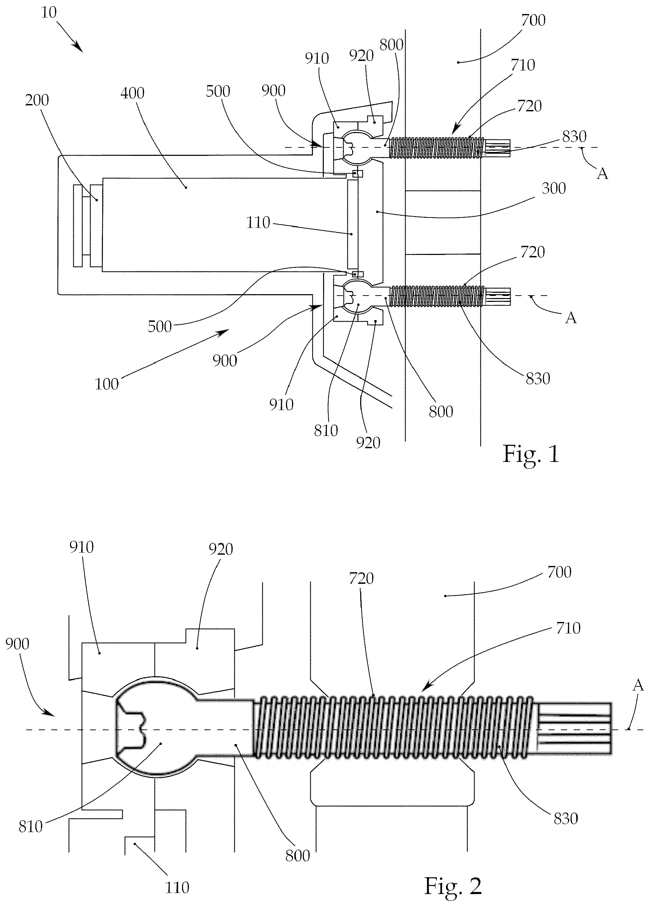

**Fig. 1** zeigt eine beispielhafte Beleuchtungsvorrichtung **10** für einen Kraftfahrzeugscheinwerfer, welche Beleuchtungsvorrichtung **10** ein Lichtmodul **100** und einen Tragerahmen **700** umfasst, an welchem das Lichtmodul **100** mittels Einstellschrauben **800** befestigt ist, wobei je eine Einstellschraube **800** einen Schraubkopf **810**, welcher als Kugelkopf ausgebildet ist, und eine Längsachse **A** umfasst, und wobei der Schraubkopf **810** an dem Lichtmodul gelenksartig gelagert ist.

Das Lichtmodul **100** selbst umfasst dabei eine Lichtquelle **110**, eine Primäroptik **200** zum Formen einer Lichtverteilung aus dem Licht der Lichtquelle **110**, einen mit der zumindest einen Lichtquelle **110** in thermischen Kontakt stehenden Kühlkörper **300**, der eingerichtet ist, Wärme von der Lichtquelle **110** abzuführen, und einen Haltekörper **400**, welcher eingerichtet ist, die Primäroptik **200** in Bezug auf die zumindest eine Lichtquelle **110** in ihrer Position zu halten, wobei der Haltekörper **400** und der Kühlkörper **300** mittels zweier Befestigungsmittel **500** miteinander verbunden sind, wobei die Befestigungsmittel **500** beispielsweise Schrauben oder Ähnliches sein können.

Ferner umfasst das Lichtmodul **100** drei Lagereinrichtungen **900** (in Fig. 1 sind aufgrund der gewählten Seitenansicht nur zwei Lagereinrichtungen zu sehen), welche Lagereinrichtungen **900** jeweils eine erste und eine zweite Lagerschale **910**, **920** umfassen, wobei die erste und die zweite Lagerschale **910**, **920** gemeinsam eine Gelenkspfanne bilden. Die Lagereinrichtungen **900** sind jeweils eingerichtet, den Schraubkopf **810** der Einstellschrauben **800** zu lagern, wobei die Gelenkspfanne den Schraubkopf **810** der Einstellschrauben **800** derart umschließt, dass die Einstellschraube **800** gegen eine Verschiebung in Richtung ihrer Längsachse **A** gesichert ist, der Schraubkopf **810** bzw. die Einstellschraube **800** drehbar um ihre Längsachse **A** gelagert ist. Die Einstellschraube **800** und die entsprechende Lagereinrichtung **900** bilden mit anderen Worten ein sogenanntes Kugelgelenk. Eine detaillierte Ansicht zu dem Eingriff zwischen Lagereinrichtung **900** und Einstellschraube **800** ist in **Fig. 2** gezeigt. Prinzipiell sind dreiachsige Drehungen der Einstellschraube **800** möglich, translatorische Bewegungen, wie bereits erwähnt, sind allerdings nicht möglich.

Die erste Lagerschale **910** ist hierbei an dem Halterkörper **400** angeordnet und einstückig mit diesem hergestellt. Die zweite Lagerschale **920** ist an dem Kühlkörper **300** angeordnet und ebenfalls einstückig mit diesem hergestellt.

Wie bereits erwähnt, ist das Lichtmodul **100** mittels der Einstellschrauben **800** auf dem Tragerahmen **700** befestigt, wobei die Einstellschrauben **800** hierfür einen Gewinde **830** aufweisenden Gewindeabschnitt **820** und der Tragerahmen entsprechende Gegengewindeelemente **710** aufweist, welche Gegengewindeelemente **710** jeweils ein zu dem Gewinde der Einstellschrauben **800** korrespondierendes Gegengewinde **720** aufweist.

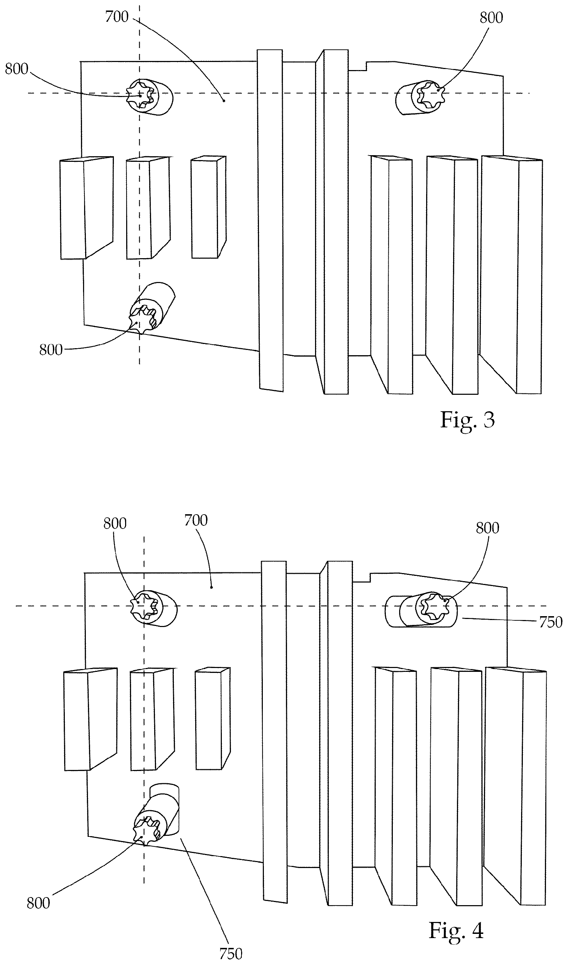

Durch die Einstellschrauben **800** kann das Lichtmodul **100** in Bezug auf den Tragerahmen **700** in seiner Ausrichtung justiert werden. Hierfür sind die Einstellschrauben **800** sowie die dazu korrespondierenden Gegengewindeelemente **710** des Tragerahmens **700** derart an dem Tragerahmen **700** angeordnet, dass gedachte Verbindungslinien zwischen den Gegengewindeelementen **710** ein rechtwinkeliges Dreieck bilden, vorzugsweise ein gleichschenkeliges rechtwinkeliges Dreieck, wobei die Einstellschrauben **800** derart in die entsprechenden Gegengewindeelemente **710** zumindest teilweise eingeschraubt sind, dass die Einstellschrauben **800** an dem Tragerahmen **700** parallel zueinander angeordnet sind. **Fig. 3** zeigt hierzu eine Rückansicht der beispielhaften Beleuchtungsvorrichtung **10**, wobei die oben erwähnten, gedachten Verbindungslinien zwischen den Einstellschrauben **800** strichliert eingezeichnet sind.

Eine solche Anordnung der Einstellschrauben **800** bzw. der Gegengewindeelemente **710** kann auch als Einstelldreieck-System bezeichnet werden. Unter dem Begriff "Einstelldreieck-System" wird im Zusammenhang mit der vorliegenden Erfindung generell ein Einstellsystem verstanden, welches über drei Stellelemente (z.B. Einstellschrauben), die mit dem korrespondierenden Lichtmodul und mit dem Tragrahmen zumindest drehbar verbunden sind, das Lichtmodul bezüglich des Tragrahmens verstellt. Dabei erfolgt normalerweise das Verstellen mittels mechanischer und/oder elektromotorischer Stellmitteln, die der Beleuchtungsvorrichtung zugeordnet sind.

Die Begriffe "vertikal" und "horizontal" beziehen sich hierbei auf eine in einen Kraftfahrzeugscheinwerfer eingebaute Beleuchtungsvorrichtung, wobei der Kraftfahrzeugscheinwerfer ordnungsgemäß in einem Kraftfahrzeug eingebaut ist.

**Fig. 4** zeigt eine weitere Rückansicht einer beispielhaften Beleuchtungsvorrichtung, wobei der Schraubabschnitt einer Einstellschraube **800** in einem vertikal ausgebildeten Langloch **750** und der Schraubabschnitt einer anderen Einstellschraube **800** in einem horizontal ausgebildeten Langloch **750** eingreift. Dies ermöglicht bei einer Justierung des Lichtmoduls noch eine weiter Einstellfreiheit. Bei Nichtvorhandensein solcher Langlöcher **750** kann es bei der Justage vorkommen die Schraubköpfe der Einstellschrauben verklemmen oder eine unnötig hohe mechanische Belastung erfahren. Die Langlöcher **750** dienen somit als ergänzende Fehlerausgleichsmöglichkeit während der Justage des Lichtmoduls.

**LISTE DER BEZUGSZEICHEN**

| | |
|---|---|
| Beleuchtungsvorrichtung... | 10 |
| Lichtmodul... | 100 |
| Lichtquelle... | 110 |
| Primäroptik... | 200 |
| Kühlkörper... | 300 |
| Haltekörper... | 400 |
| Befestigungsmittel... | 500 |
| Tragerahmen... | 700 |
| Gegengewindeelement... | 710 |
| Gegengewinde... | 720 |
| Langloch... | 750 |
| Einstellschraube... | 800 |
| Schraubkopf... | 810 |
| Gewindeabschnitt... | 820 |
| Gewinde... | 830 |
| Lagereinrichtung... | 900 |
| Erste Lagerschale... | 910 |
| Zweite Lagerschale... | 920 |
| Längsachse... | A |

## Patentansprüche

1. Beleuchtungsvorrichtung für einen Kraftfahrzeugscheinwerfer, welche Beleuchtungsvorrichtung (10) Folgendes umfasst:
- ein Lichtmodul (100), umfassend:
- zumindest eine Lichtquelle (110),
- eine Primäroptik (200) zum Formen einer Lichtverteilung aus dem Licht der zumindest einen Lichtquelle (110),
- einen mit der zumindest einen Lichtquelle (110) in thermischen Kontakt stehenden Kühlkörper (300), der eingerichtet ist, Wärme von der zumindest einen Lichtquelle (110) abzuführen, und
- einen Haltekörper (400), welcher eingerichtet ist, die Primäroptik (200) in Bezug auf die zumindest eine Lichtquelle (110) in ihrer Position zu halten, wobei der Haltekörper (400) und der Kühlkörper (300) mittels zumindest eines Befestigungsmittels (500) miteinander verbunden sind,
- und einen Tragerahmen (700), an welchem das Lichtmodul (100) über zumindest eine Einstellschraube (800) befestigt ist, wobei die Einstellschraube (800) einen Schraubkopf (810) und einen Schraubabschnitt entlang einer Längsachse (A) umfasst, welcher Schraubkopf (810) an dem Lichtmodul (100) gelenksartig gelagert ist und welcher Schraubabschnitt an dem Tragerahmen (400) angreift,
**dadurch gekennzeichnet, dass**
das Lichtmodul (100) zumindest eine Lagereinrichtung (900) zur gelenkartigen Lagerung des Schraubkopfes (810) der zumindest einen Einstellschraube (800) umfasst, welche Lagereinrichtung (900) eine erste und eine zweite Lagerschale (910, 920) umfasst, wobei die erste und die zweite Lagerschale (910, 920) durch Zusammenführen der beiden Lagerschalen gemeinsam eine Gelenkspfanne bilden, wobei die erste Lagerschale (910) an dem Haltekörper (400) angeordnet ist und die zweite Lagerschale (920) an dem Kühlkörper (300) angeordnet ist, und wobei die Lagereinrichtung (900) eingerichtet ist, den Schraubkopf (810) der zumindest einen Einstellschraube (800) zu lagern, und wobei die Gelenkspfanne den Schraubkopf (810) der zumindest einen Einstellschraube (800) derart umschließt, dass die zumindest eine Einstellschraube (800) gegen eine Verschiebung in Richtung ihrer Längsachse (A) gesichert ist.

2. Beleuchtungsvorrichtung nach Anspruch 1, **dadurch gekennzeichnet, dass** die zumindest eine Einstellschraube (800) einen Gewinde (830) aufweisenden Gewindeabschnitt (820) und der Tragerahmen (700) zumindest ein Gegengewindeelement (710) umfasst, welches zumindest eine Gegengewindeelement (710) ein zu dem Gewinde (830) der zumindest einen Einstellschraube (800) korrespondierendes Gegengewinde (720) aufweist.

3. Beleuchtungsvorrichtung nach Anspruch 1 oder 2, **dadurch gekennzeichnet, dass** das Lichtmodul (100) zumindest zwei Lagereinrichtungen (900) umfasst, wobei die Beleuchtungsvorrichtung (10) eine der Anzahl der Lagereinrichtungen (900) entsprechende Anzahl an korrespondierenden Einstellschrauben (800) aufweist.

4. Beleuchtungsvorrichtung nach Anspruch 3, **dadurch gekennzeichnet, dass** das Lichtmodul (100) genau drei Lagereinrichtungen (900) umfasst, wobei die Beleuchtungsvorrichtung (10) zumindest drei zu den entsprechenden Lagereinrichtungen (900) korrespondierende Einstellschrauben (800) umfasst.

5. Beleuchtungsvorrichtung nach Anspruch 4, **dadurch gekennzeichnet, dass** die zu den Einstellschrauben (800) korrespondierenden Gegengewindeelemente (710) des Tragerahmens (700) derart an dem Tragerahmen (700) angeordnet sind, dass gedachte Verbindungslinien zwischen den Gegengewindeelementen (710) ein rechtwinkeliges Dreieck bilden, vorzugsweise ein gleichschenkeliges rechtwinkeliges Dreieck.

6. Beleuchtungsvorrichtung nach einem der Ansprüche 3 bis 5, **dadurch gekennzeichnet, dass** die Längsachsen (A) der Einstellschrauben (800) im zumindest teilweise eingeschraubten Zustand der Einstellschrauben (800) an dem Tragerahmen (700) parallel zueinander angeordnet sind.

7. Beleuchtungsvorrichtung nach einem der Ansprüche 1 bis 6, **dadurch gekennzeichnet, dass** die erste Lagerschale (910) der zumindest einen Lagereinrichtung (900) einstückig mit dem Haltekörper (400) hergestellt ist.

8. Beleuchtungsvorrichtung nach einem der Ansprüche 1 bis 7, **dadurch gekennzeichnet, dass** die zweite Lagerschale (920) der zumindest einen Lagereinrichtung (900) einstückig mit dem Kühlkörper (300) hergestellt ist.

9. Beleuchtungsvorrichtung nach einem der Ansprüche 1 bis 8, **dadurch gekennzeichnet, dass** der Schraubkopf (810) der zumindest einen Einstellschraube (800) drehbar um die Längsachse (A) der Einstellschraube (800) in der zumindest einen Lagereinrichtung (900) gelagert ist.

10. Beleuchtungsvorrichtung nach einem der Ansprüche 1 bis 9, **dadurch gekennzeichnet, dass** der Schraubkopf (810) der zumindest einen Einstellschraube (800) als Gelenkskopf bzw. als Kugelkopf ausgebildet ist.

11. Kraftfahrzeugscheinwerfer mit zumindest einer Beleuchtungsvorrichtung (10) gemäß einem der Ansprüche 1 bis 10.
